# EUROPÄISCHE PATENTSCHRIFT

(11) **EP 2 656 141 B1**
(45) Veröffentlichungstag und Bekanntmachung des Hinweises auf die Patenterteilung: **29.07.2015**
(21) Anmeldenummer: 11810575.8
(22) Anmeldetag: 19.12.2011
(51) Int. Cl.: G02F 1/35, G02F 1/39

(54) **EFFIZIENTE FREQUENZKONVERSION**
EFFICIENT FREQUENCY CONVERSION
CONVERSION DE FRÉQUENCE EFFICACE

(30) Priorität: 21.12.2010 DE 102010055284
(43) Veröffentlichungstag der Anmeldung: 30.10.2013
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: JÀUREGUI MISAS, César, 07743 Jena (DE); TÜNNERMANN, Andreas, 99425 Weimar (DE); LIMPERT, Jens, 07751 Jena (DE); NODOP, Dirk, 07749 Jena (DE)
(74) Vertreter: Isfort, Olaf
(86) Internationale Anmeldenummer: PCT/EP2011/006411
(87) Internationale Veröffentlichungsnummer: WO 2012/084179

(56) Entgegenhaltungen:
- EP-A1- 1 306 718
- US-A1- 2009 141 340
- NODOP D ET AL: "Efficient high-power generation of visible and mid-infrared light by degenerate four-wave-mixing in a large-mode-area photonic-crystal fiber", OPTICS LETTERS, OSA, OPTICAL SOCIETY OF AMERICA, WASHINGTON, DC, US, Bd. 34, Nr. 22, 15. November 2009 (2009-11-15), Seiten 3499-3501, XP001550121, ISSN: 0146-9592, DOI: 10.1364/OL.34.003499 in der Anmeldung erwähnt

## Beschreibung

Die Erfindung betrifft eine Vorrichtung zur Erzeugung von elektromagnetischer Strahlung, mit einer Pumplichtquelle, die eine Anregungsstrahlung bei einer ersten Wellenlänge emittiert, und mit einem optischen Wellenleiter, der durch degenerierte Vierwellenmischung aus der Anregungsstrahlung der Pumplichtquelle frequenzkonvertierte Strahlung bei einer zweiten und einer dritten Wellenlänge erzeugt.

In der Analytik, der Medizin, der Militärtechnik sowie im zivilen Ingenieurwesen existiert ein wachsendes Interesse an Laserquellen, welche Strahlung beugungsbegrenzt und monochromatisch emittieren. Der sichtbare Wellenlängenbereich (VIS) und der mittlere infrarote Wellenlängenbereich (MIR) sind hier von besonderem Interesse. Diese Spektralbereiche umfassen Wellenlängen von ca. 380-780 nm und von 1,7-5 µm. Strahlung dieser Wellenlängen wird besonders bei der Raman-Spektroskopie, dem Verbrennungsmonitoring, der Gasdetektion, der aktiven Thermografie oder auch der Halbleiterprozessierung benötigt. Leider gibt es jedoch bis heute keine einfach aufgebauten und leistungsstarken Laserquellen, welche monochromatisch bzw. kohärent emittieren. Zudem sind die vorhandenen Quellen sehr teuer.

Für die Erzeugung sichtbarer Strahlung existieren im Stand der Technik verschiedene Ansätze. Der übliche Ansatz ist die Entwicklung von Lasern, welche direkt im sichtbaren Spektralbereich emittieren. Dazu gehören Halbleiterlaser, Farbstofflaser und Gaslaser. Für die oben genannten Anwendungen sind diese jedoch größtenteils ungeeignet, da sie eine zu geringe Ausgangsleistung aufweisen. Ebenso wird häufig die nichtlineare Frequenzkonversion von infrarotem Licht in den sichtbaren Bereich angewendet. Die Druckschrift US 6,744,552 B2 beschreibt beispielsweise eine Frequenzkonversion, bei welcher eine photonische Bandlückenstruktur zur Summenfrequenzerzeugung ins Sichtbare aus zwei unterschiedlichen Wellenlängen im Nahinfraroten verwendet wird.

Für die Erzeugung von Strahlung im mittleren infraroten Spektralbereich existieren im Stand der Technik ebenfalls Laser, welche MIR-Strahlung direkt oder durch nichtlineare Frequenzkonversion erzeugen. Die direkte Erzeugung erfolgt dabei mittels Festkörperlasern (Diodenlasern) auf Basis exotischer Materialien wie z.B. Antimon oder Bleisalzen. Im Falle der nichtlinearen Frequenzkonversion erfolgt die Erzeugung der Differenzfrequenz zweier Frequenzen im nahinfraroten Spektralbereich unter Nutzung der Nichtlinearität zweiter Ordnung beispielsweise in periodisch gepoltem Lithiumniobat.

Da die im Stand der Technik gebräuchlichen Quellen, wie zuvor ausgeführt, wenig Ausgangsleistung aufweisen und zudem relativ teuer und komplex aufgebaut sind, gibt es daneben Ansätze, Vorrichtungen zu verwenden, welche einen optischen Wellenleiter beinhalten. Innerhalb des optischen Wellenleiters, insbesondere innerhalb einer optischen Faser, werden dabei zur Konversion nichtlineare Effekte dritter Ordnung (Vierwellenmischung) genutzt, wie beispielsweise parametrische Verstärkung, degenerierte Vierwellenmischung und Modulationsinstabilität.

Die Druckschrift US 2006/0239604 A1 beschreibt die Einkopplung zweier Anregungswellenlängen in eine nichtlineare Faser zur Erzeugung einer dritten Wellenlänge durch parametrische Verstärkung.

Die Druckschrift US 6,043,927 A beschreibt ein System, bei welchem anhand nur einer Pumpwellenlänge neue Wellenlängen durch Modulationsinstabilität erzeugt werden. Die erzeugten Wellenlängen liegen hier jedoch recht nahe zu der Pumpwellenlänge.

Daneben existieren im Stand der Technik Vorrichtungen der eingangs genannten Art, welche degenerierte Vierwellenmischung (DFWM) nutzen. Die Veröffentlichung "Efficient high power generation of visible and mid-infrared light by degenerated four-wave-mixing in a large mode area photonic crystal fiber", D. Nodop, C. Jauregui, D. Schimpf, J. Limpert, A. Tünnermann, Optics Letters, Vol. 34, Nr. 22, pp. 3499-3501, 2009, auf der die Präambel von Anspruch 1 basiert, beschreibt eine Methode zur Erzeugung sichtbarer und MIR-Strahlung mit Hilfe optischer Large-Mode-Area-Fasern. Die Methode basiert auf dem Prinzip der degenerierten Vierwellenmischung (DFWM), bei welcher aus Anregungsstrahlung bei einer geeignete ersten Wellenlänge (Pumpwellenlänge) gleichzeitig Strahlung bei zwei neuen Wellenlängen generiert wird, die in den gewünschten spektralen Bereichen liegen. Die erzeugten Strahlungsanteile sind dabei kohärent und spektral schmalbandig. Bei dieser Konversionsmethode ergibt sich jedoch der Nachteil, dass die erzeugten Strahlungsanteile durch Rücktransferprozesse der Pulsenergien der beteiligten Wellenlängen verzerrt werden, so dass diese aus multiplen Peaks bestehen. Die verzerrte Pulsform und die dadurch hervorgerufene begrenzte Pulsspitzenleistung sind für die meisten Anwendungen ungeeignet.

Es ist daher Aufgabe der Erfindung, eine Vorrichtung zu schaffen, welche eine verbesserte Pulsform und Konversionseffizienz gewährleistet.

Diese Aufgabe löst die Erfindung ausgehend von einer Vorrichtung der eingangs genannten dadurch, dass ein Filterelement vorgesehen ist, das die Strahlung bei der zweiten oder dritten Wellenlänge dämpft und dadurch ein Ungleichgewicht in der Photonenzahl der Strahlungsanteile der frequenzkonvertierten Strahlung erzeugt, wobei das Filterelement bei der zweiten oder dritten Wellenlänge eine Dämpfung > 10 dB/m aufweist.

Dadurch, dass einer der beim DFWM-Prozess generierten Strahlungsanteile mittels des Filterelementes gedämpft wird, können unerwünschte Rücktransferprozesse zur Anregungsstrahlung unterbunden werden. In der erfindungsgemäßen Vorrichtung propagiert im Eingangsbereich des verwendeten optischen Wellenleiters die gesamte eingekoppelte Leistung bei der Wellenlänge der Anregungsstrahlung. Während der Propagation durch die Faser verursacht der Prozess der degenerierten Vierwellenmischung einen Photonentransfer von der ersten Wellenlänge zur zweiten und dritten Wellenlänge. Dies ist so vorstellbar, dass zwei Photonen bei der ersten Wellenlänge vernichtet werden und jeweils ein Photon mit kürzerer und längerer Wellenlänge erzeugt wird. Das dämpfende Filterelement sorgt nun dafür, dass die Photonenzahl bei einer der beiden neu generierten Wellenlängen reduziert wird. Dies führt zu einem Ungleichgewicht in der Photonenzahl der beteiligten Strahlungsanteile und damit auch zu einem Ungleichgewicht der propagierenden Leistungen. Da nun für die Rückkonversion zu der ersten Wellenlänge die Photonen des gedämpften Strahlungsanteils fehlen, wird der Rücktransferprozess effektiv unterbrochen. Wenn diese Dämpfungsverluste hoch genug sind, so dass praktisch alle Photonen bei der gedämpften Wellenlänge verschwinden, wird fast kein Rücktransferprozess mehr auftreten. Effektiv führt das zu einem unidirektionalen Energiefluss von der Anregungsstrahlung zu der Strahlung bei der (zweiten oder dritten) ungedämpften Wellenlänge. Das Ergebnis ist ein sauber geglätteter Puls, welcher über eine deutlich höhere Pulsspitzenleistung verfügt als im Stand der Technik.

Optische Wellenleiter im Sinne der Erfindung können dabei optische Fasern, photonische Kristallfasern, photonische Bandlückenfasern, Glasfasern mit Seltenerddotierung oder auch Polymerfasern sein.

Als Pumplichtquellen kommen alle üblichen Quellen in Frage, insbesondere Microchiplaser, durchstimmbare Laser oder auch Faserlaser.

Eine Ausführungsvariante sieht vor, dass der optische Wellenleiter eine optische LMA-Faser ist. Eine Large-Mode-Area-Faser ist für die erfindungsgemäße Vorrichtung bestens geeignet, um eine monochromatische, schmalbandige Strahlung zu erzielen. Insbesondere die große Kernfläche der LMA-Faser macht diese besonders geeignet für eine Vorrichtung mit hoher Ausgangsleistung, auch bei hochenergetischer Strahlung im ps-Bereich.

Es empfiehlt sich zudem, dass die optische Faser eine mikrostrukturierte Endlessly-Single-Mode-Faser ist. In solchen Fasern ist über einen breiten Spektralbereich nur die Propagation der Grundmode möglich. Dies maximiert automatisch den räumlichen Überlapp der Moden der Strahlung bei den drei beteiligten Wellenlängen.

Die Erfindung sieht vor, dass die zweite und/oder dritte Wellenlänge im VIS-oder MIR-Bereich des optischen Spektrums liegen. Hierdurch wird der erhöhten Nachfrage nach hochenergetischen Laserquellen innerhalb dieser spektralen Bereiche Rechnung getragen. Zur Erzeugung der gewünschten spektralen Strahlungsanteile im VIS- und MIR-Bereich sind die erste Wellenlänge, d.h. die Anregungsstrahlung der Pumplichtquelle, und das Material und die sonstigen Eigenschaften des optischen Wellenleiters aufeinander abzustimmen.

Bevorzugt ist das Filterelement in den optischen Wellenleiter integriert. Ein solches faserintegriertes Filter kann beispielsweise ein Gitter, insbesondere ein langperiodisches Gitter, oder auch ein Interferenzfilter sein. Alternativ ist es möglich, die Materialeigenschaften des optischen Wellenleiters bzw. der Faser zu nutzen. Hierbei kommen insbesondere die Auswahl des Glases, die Dotierung, Gase oder Flüssigkeiten in Kapillarstrukturen der Faser usw. in Betracht. In diesen Fällen erfolgt die Dämpfung bei der zweiten oder dritten Wellenlänge durch Absorption durch das Material des optischen Wellenleiters. Beispielsweise kann im Falle einer optischen Quarzglasfaser die starke Absorption im Bereich von 2,7 nm, verursacht durch molekulare Übergänge des OH-Anteils in Quarzglas, genutzt werden, um die Konversionseffizienz in den sichtbaren Bereich zu verbessern. Alternativ oder zusätzlich kann eine spektrale Filterung durch Biegung der Faser erfolgen. Durch die Biegung können gezielt Verluste der geführten Strahlung innerhalb des optischen Wellenleiters herbeigeführt werden.

Gemäß der Erfindung weist das Filterelement bei der zweiten oder dritten Wellenlänge eine Dämpfung > 10 dB/m auf. Diese Dämpfung hat sich als geeignet herausgestellt, um den zu dämpfenden Strahlungsanteil in einem solchen Verhältnis zu dem nicht gedämpften Strahlungsanteil zu reduzieren, dass ein Rücktransferprozess ausgeschlossen ist und die Ausgangsstrahlung der erfindungsgemäßen Vorrichtung keine Pulsverzerrung mehr aufweist. Erfindungsgemäß sollte die erste Wellenlänge im Bereich der normalen Dispersion des Wellenleiters liegen. Hierdurch wird die Konversionseffizienz durch degenerierte Vierwellenmischung optimiert.

Weiterhin empfiehlt es sich, dass die Pumplichtquelle eine gepulste ns- oder ps-Lichtquelle mit einer Pulsspitzenleistung von mehreren 10 Kilowatt ist. Eine solche Pumpleistung ist ausreichend, um die nichtlineare Generierung der beiden spektralen Strahlungsanteile innerhalb des optischen Wellenleiters hervorzurufen.

Eine Ausführungsvariante der Erfindung sieht vor, dass der optische Wellenleiter aus Quarzglas ist und die Wellenlänge der Anregungsstrahlung der Pumplichtquelle 1064 nm beträgt, wobei die generierten Strahlungsanteile Wellenlängen von 673 nm und 2539 nm aufweisen.

Quarzglas als Standardmaterial für optische Fasern ist sehr gut geeignet, durch den Effekt der degenerierten Vierwellenmischung sichtbare und mittlere Infrarotstrahlung zu erzeugen. Eine Anregungsstrahlung mit einer Wellenlänge im Bereich von 1064 nm kann durch eine Vielzahl von Pumplichtquellen bereitgestellt werden. Bei dieser Pumpwellenlänge erzeugt eine Quarzglasfaser einen großen spektralen Abstand zwischen den generierten spektralen Strahlungsanteilen, wobei im Einzelnen die generierten Strahlungsanteile eine zweite Wellenlänge von 673 nm und eine dritte Wellenlänge von 2539 nm aufweisen. Zur Erzielung eines unverzerrten Pulses muss zumindest einer der generierten Strahlungsanteile durch das Filterelement gedämpft werden. In dem Falle, dass eine Ausgangsstrahlung im sichtbaren Spektralbereich gewünscht ist, wird die dritte Wellenlänge bei 2539 nm gedämpft. In dem Falle, dass eine Ausgangsstrahlung im MIR-Bereich gewünscht ist, wird der sichtbare Wellenlängenanteil bei der zweiten Wellenlänge von 673 nm gedämpft. Die Dämpfung der nicht gewünschten Wellenlänge kann dabei mittels spektraler Filterung durch ein Gitter, ein Interferenzfilter, durch entsprechende Wahl der Materialeigenschaften der Faser oder durch Biegung der Faser bzw. durch Beeinflussung der Führungseigenschaften der Faser erfolgen.

Ausführungsbeispiele der Erfindung werden im Folgenden anhand der Figuren näher erläutert. Es zeigen:
- Figur 1:: schematische Darstellung einer erfindungsgemäßen Vorrichtung;
- Figur 2:: Illustration der Frequenzkonversion durch degenerierte Vierwellenmischung;
- Figur 3:: zeitlicher Verlauf zweier gemäß dem Stand der Technik erzeugter Laserpulse,
- Figur 4:: Illustration der Frequenzkonversion durch degenerierte Vierwellenmischung mit erfindungsgemäßer Dämpfung bei einer der beteiligten Wellenlängen;
- Figur 5:: zeitlicher Verlauf eines erfindungsgemäß erzeugten Laserpulses;
- Figur 6:: ein Konversionsdiagramm einer Quarzglasfaser.

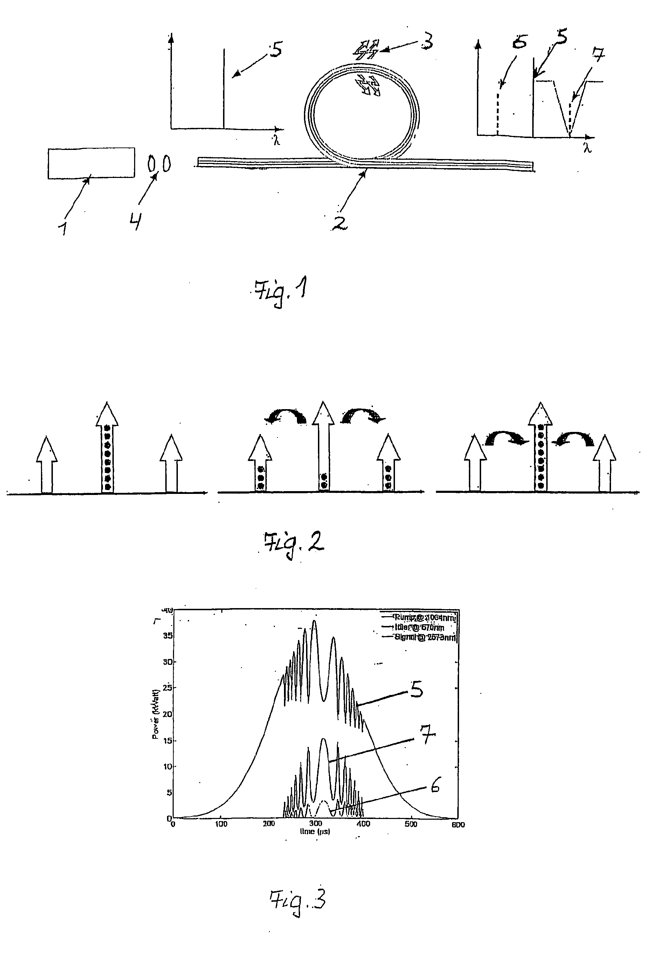

Die Vorrichtung gemäß Figur 1 weist eine Pumplichtquelle 1 auf sowie einen optischen Wellenleiter 2 in Form einer Faser. Die Faser 2 weist durch Materialabsorption ein Filterelement 3 auf. Zwischen der Pumplichtquelle 1 und der Faser 2 ist eine Fokussieroptik 4 angeordnet, welche die Anregungsstrahlung der Pumplichtquelle 1 auf den Eingang der optischen Faser 2 fokussiert. Die Anregungsstrahlung 5 ist im Wesentlichen monochromatisch und wird von der Pumplichtquelle 1 bei einer ersten Wellenlänge emittiert, wie in dem in Figur 1 links dargestellten Diagramm illustriert. In der Faser 2 wird durch degenerierte Vierwellenmischung frequenzkonvertierte Strahlung mit Strahlungsanteilen 6, 7 bei einer zweiten Wellenlänge und einer dritten Wellenlänge erzeugt. Wie in dem rechts in Figur 1 dargestellten Diagramm illustriert, wird durch das Filterelement 3 der Strahlungsanteil 7 bei der dritten Wellenlänge gedämpft. Am Ausgang der optischen Faser 2 verlässt im Wesentlichen nur der Strahlungsanteil 6 bei der zweiten Wellenlänge die Vorrichtung mit der gewünschten Leistung.

Um durch die Vorrichtung eine optimale Konversionseffizienz zu gewährleisten, müssen im Wesentlichen drei Anforderungen erfüllt sein. Zum einen muss die Leistung der Anregungsstrahlung 5 ausreichend hoch sein, zum anderen muss sich die Anregungsstrahlung 5 im Bereich der normalen Dispersion der verwendeten Faser 2 befinden. Und drittens müssen die Moden der beteiligten drei Strahlungsanteile 5, 6, 7 einen möglichst guten räumlichen Überlapp in der Faser 2 haben.

Da die Erfindung degenerierte Vierwellenmischung (DFWM) nutzt, ist nur eine monochromatische Anregungsstrahlung 5 erforderlich, um zunächst gleichzeitig zwei Strahlungsanteile 6, 7 zu generieren. Wird die monochromatische Anregungsstrahlung 5 richtig gewählt, so kann auf diese Weise im Falle einer Faser 2 aus Quarzglas sichtbare 6 oder MIR-Strahlung 7 erzeugt werden.

Im Falle des konventionellen DFWM-Prozesses gemäß Figur 2 propagiert am Anfang der Faser 2 die gesamte eingekoppelte Anregungsstrahlung 5 bei der ersten Wellenlänge. Während der Propagation verursacht der DFWM-Prozess einen Photonentransfer von der ersten Wellenlänge hin zur zweiten bzw. dritten Wellenlänge der beiden Strahlungsanteile 6, 7. Zwei Pumpphotonen werden so vernichtet und ein Photon mit jeweils kürzerer und längerer Wellenlänge wird erzeugt. Dieser Transfer erfolgt so lange, bis der Photonenfluss der Anregungsstrahlung 5 und der beiden generierten Strahlungsanteile 6, 7 gleich groß ist. Anschließend erfolgt ein Richtungswechsel des Energieflusses, wobei jeweils ein Photon der generierten Strahlungsanteile 6, 7 vernichtet wird, um wieder zwei Photonen bei der Wellenlänge der Anregungsstrahlung 5 zu erzeugen. Dieser Prozess erfolgt so lange, bis fast keine Photonen bei der zweiten und dritten Wellenlänge mehr vorhanden sind. Sodann beginnt der Zyklus von neuem. Die ständige Wiederholung des Zyklus während eines Laserpulses führt zu multiplen Spitzen im Laserpuls, was in Figur 3 dargestellt ist. Derartige, sog. bifurkierte Pulse sind für viele Anwendungen ungeeignet. Auch bleibt die Konversionseffizienz und Pulsspitzenleistung weit unterhalb dessen, was bei Unterdrückung des Richtungswechsels des Energieflusses möglich wäre.

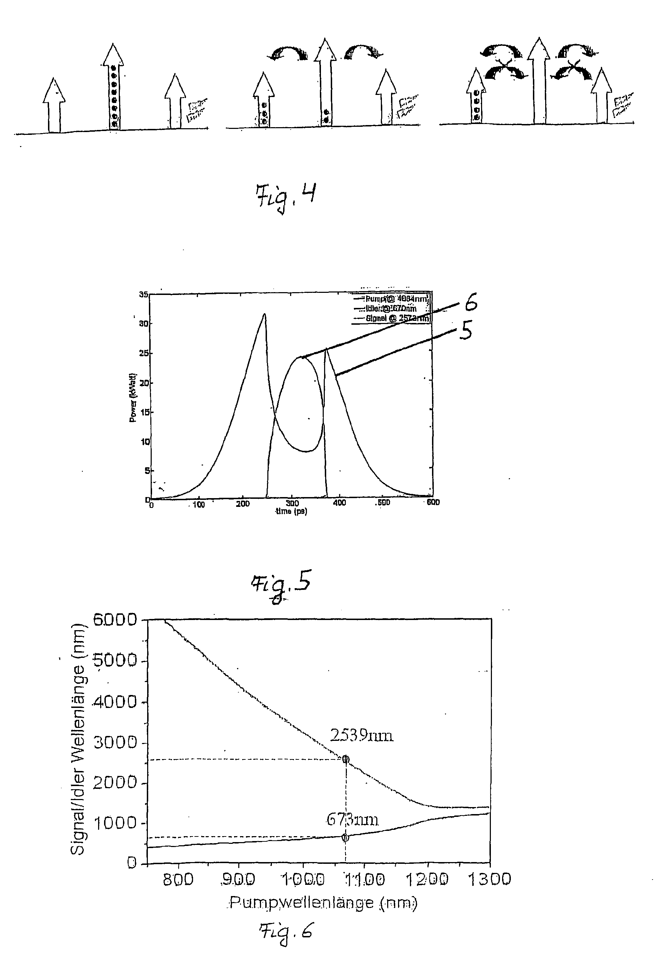

Wird nun erfindungsgemäß ein Filtermechanismus in die Faser 2 eingefügt, ändern sich die Verhältnisse während des DFWM-Prozesses. Diese Situation ist in Figur 4 dargestellt. Am Anfang der Faser 2 befindet sich auch hier wieder die gesamte Energie in der Wellenlänge der Anregungsstrahlung 5. Wenn nun die Anregungsstrahlung 5 in der Faser 2 propagiert und die Strahlungsanteile 6, 7 generiert werden, sorgt das Filterelement 3 in Form der gebogenen Faser 2 für eine Reduktion der Photonenzahl des Strahlungsanteils 7, d.h. bei der dritten Wellenlänge. Dies führt zu einem Ungleichgewicht in der Photonenzahl der generierten Strahlungsanteile 6, 7 und damit auch zu einem Ungleichgewicht der propagierenden Leistungen. Da nun jeweils ein Photon des anderen Strahlungsanteils 6, 7 erforderlich ist, um eine Rückkonversion zu der Wellenlänge der Anregungsstrahlung 5 zu bewirken, wird der Rücktransferprozess unterbrochen. Sind nun die Filterverluste hoch genug, verschwinden praktisch alle Photonen des gedämpften generierten Strahlungsanteils 7, so dass fast kein Rücktransferprozess mehr stattfindet. Effektiv führt das zu einem unidirektionalen Energiefluss von der ersten Wellenlänge der Anregungsstrahlung 5 zu dem ungedämpften generierten Strahlungsanteil 6.

Figur 5 zeigt den gemäß Figur 4 resultierenden Laserpuls des ungedämpften generierten Strahlungsanteils 6. Es zeigt sich, dass die erfindungsgemäße Wellenlängenkonversion in glatten Pulsen mit wesentlich höherer Konversionseffizienz bzw. Pulsspitzenleistung resultiert.

Es gibt mehrere Möglichkeiten, die Verluste für einen der generierten Strahlungsanteile 6, 7 in der Faser 2 herbeizuführen. Einerseits ist dies durch den Einsatz von Filtern möglich, wie beispielsweise langperiodischen Gittern, andererseits durch Ausnutzung bestimmter Absorptionslinien des Fasermaterials oder eines Gases/einer Flüssigkeit, welche sich z.B. in einer Kapillarstruktur der optischen Faser 2 befinden. Es ist weiterhin möglich, die Verluste mittels Biegung der Faser 2 herbeizuführen.

Die degenerierte Vierwellenmischung (DFWM) ist ein Dreiwellenmischprozess, der eine Phasenanpassung der beteiligten Strahlungsanteile 5, 6, 7 erfordert. Gleichzeitig gilt das Prinzip der Energieerhaltung bei der Erzeugung und Vernichtung der Photonen der jeweiligen Strahlungsanteile 5, 6, 7. Phasenanpassung und Energieerhaltung legen damit die generierten Strahlungsanteile 6, 7 des DFWM-Prozesses bei gegebener Anregungsstrahlung 5 fest. Sowohl die Wellenlängen der generierten Strahlungsanteile 6, 7 als auch ihre relative spektrale Distanz zueinander hängen von der Faserdispersion (z.B. Materialdispersion und Wellenleiterdispersion) und der Nulldispersionswellenlänge der optischen Faser 2 ab. Darum kann die Bestimmung der DFWM-Strahlungsanteile 6, 7 gemäß der Erfindung durch Auswahl des Fasermaterials und/oder der Wellenleitereigenschaften der Faser 2 erfolgen.

Ist ein bestimmter spektraler Abstand zwischen den generierten Strahlungsanteilen 6, 7 erwünscht, beispielsweise im VIS- und MIR-Bereich, so ist es notwendig, ein Fasermaterial auszuwählen, dessen Materialdispersion wie beschrieben zu der Wellenlänge einer gewählten Anregungsstrahlung 5 passt. Figur 6 zeigt das Phasenanpassungsverhalten einer Quarzglasfaser 2. Bei Anregungsstrahlung 5 einer ersten Wellenlänge von beispielsweise 1064 nm betragen die Wellenlängen der generierten Strahlungsanteile 6, 7 673 nm und 2539 nm.

Bei Wellenlängen > 3 µm hat Quarzglas allerdings hohe Propagationsverluste von rund 100 dB/m. Bei längeren Wellenlängen müssen deshalb andere Materialien herangezogen werden, wie beispielsweise Chalkogenide, Bleioxide oder Fluoride. Bei der Erzeugung sichtbarer Strahlung ist der oben beschriebene Verlust im MIR-Bereich allerdings sehr nützlich, da hier ein intrinsischer, materialbedingter Verlustmechanismus vorliegt, der eine effiziente Erzeugung sichtbarer Strahlung ermöglicht bei gleichzeitig sauberer Ausgangspulsform.

## Patentansprüche

1. Vorrichtung zur Erzeugung von elektromagnetischer Strahlung, mit einer Pumplichtquelle (1), die eine Anregungsstrahlung (5) bei einer ersten Wellenlänge emittiert, mit einem optischen Wellenleiter (2), der durch degenerierte Vierwellenmischung aus der Anregungsstrahlung (5) der Pumplichtquelle (1) frequenzkonvertierte Strahlung (6, 7) bei einer zweiten und einer dritten Wellenlänge erzeugt,
und mit einem Filterelement (3), das die Strahlung (6, 7) bei der zweiten oder dritten Wellenlänge dämpft und dadurch ein Ungleichgewicht in der Photonenzahl der Strahlungsanteile der frequenzkonvertierten Strahlung (6, 7) erzeugt, **dadurch gekennzeichnet, dass** das Filterelement (3) bei der zweiten oder dritten Wellenlänge eine Dämpfung > 10 dB/m aufweist, so dass ein Rücktransferprozess ausgeschlossen ist.

2. Vorrichtung nach Anspruch 1, **dadurch gekennzeichnet, dass** der optische Wellenleiter (2) eine optische, Large-Mode-Area-Faser ist.

3. Vorrichtung nach Anspruch 1 oder 2, **dadurch gekennzeichnet, dass** der optische Wellenleiter eine mikrostrukturierte Endlessly-Single-Mode-Faser ist.

4. Vorrichtung nach einem der vorhergehenden Ansprüche, **dadurch gekennzeichnet, dass** die zweite und/oder dritte Wellenlänge im sichtbaren oder mittleren infraroten Bereich des optischen Spektrums liegen.

5. Vorrichtung nach einem der vorhergehenden Ansprüche, **dadurch gekennzeichnet, dass** das Filterelement (3) in den optischen Wellenleiter (2) integriert ist.

6. Vorrichtung nach einem der vorhergehenden Ansprüche, **dadurch gekennzeichnet, dass** das Filterelement (3) ein langperiodisches Gitter ist.

7. Vorrichtung nach einem der vorhergehenden Ansprüche, **dadurch gekennzeichnet, dass** das Filterelement (3) durch die Materialeigenschaften des optischen Wellenleiters (2) gebildet ist.

8. Vorrichtung nach einem der vorhergehenden Ansprüche, **dadurch gekennzeichnet, dass** die erste Wellenlänge im Bereich der normalen Dispersion des Wellenleiters (2) liegt.

9. Vorrichtung nach einem der vorhergehenden Ansprüche, **dadurch gekennzeichnet, dass** die in dem Wellenleiter (2) propagierende Strahlung bei der ersten, zweiten und dritten Wellenlänge einen hohen Modenüberlapp aufweisen.

10. Vorrichtung nach einem der vorhergehenden Ansprüche, **dadurch gekennzeichnet, dass** die Pumplichtquelle (1) eine gepulste ns- oder ps-Lichtquelle ist.

11. Vorrichtung nach einem der vorhergehenden Ansprüche, **dadurch gekennzeichnet, dass** der optische Wellenleiter (2) aus Quarzglas besteht.

12. Verfahren zur Erzeugung von elektromagnetischer Strahlung, wobei eine Anregungsstrahlung (5) bei einer ersten Wellenlänge mittels einer Pumplichtquelle (1) erzeugt wird und mittels eines Wellenleiters (2) durch degenerierte Vierwellenmischung aus der Anregungsstrahlung (5) frequenzkonvertierte Strahlung (6, 7) bei einer zweiten und einer dritten Wellenlänge erzeugt wird,
wobei
die im Wellenleiter (2) propagierende Strahlung (6, 7) bei der zweiten oder dritten Wellenlänge mittels eines Filterelementes (3) gedämpft wird und dadurch ein Ungleichgewicht in der Photonenzahl der Strahlungsanteile der frequenzkonvertierten Strahlung (6, 7) erzeugt wird, **dadurch gekennzeichnet, dass** das Filterelement bei der zweiten oder dritten Wellenlänge eine Dämpfung > 10 dB/m aufweist, so dass ein Rücktransferprozess ausgeschlossen ist.

## Claims

1. Apparatus for generation of electromagnetic radiation, having a pump light source (1) that emits an excitation radiation (5) at a first wavelength, having an optical waveguide (2) that generates frequency-converted radiation (6, 7) at a second and a third wavelength, by means of degenerate wave mixing, from the excitation radiation (5) of the pump light source (1), and a filter element (3) that attenuates the radiation (6, 7) at the second or third wavelength and which generates a non-equilibrium in the photon count of the radiation components of the frequency-converted radiation (6, 7),
**characterized in that** the filter element (3) has an attenuation > 10 dB/m at the second or third wavelength, so that a re-transfer process is excluded.

2. Apparatus according to claim 1, **characterized in that** the optical waveguide (2) is an optical, large-mode-area fiber.

3. Apparatus according to claim 1 or 2, **characterized in that** the optical waveguide is a micro-structured endlessly-single-mode fiber.

4. Apparatus according to one of the preceding claims, **characterized in that** the second and/or the third wavelength lie(s) in the visible or mid infrared range of the optical spectrum.

5. Apparatus according to one of the preceding claims, **characterized in that** the filter element (3) is integrated into the optical waveguide (2).

6. Apparatus according to one of the preceding claims, **characterized in that** the filter element (3) is a long-period grating.

7. Apparatus according to one of the preceding claims, **characterized in that** the filter element (3) is formed by the material properties of the optical waveguide (2).

8. Apparatus according to one of the preceding claims, **characterized in that** the first wavelength lies in the range of the normal dispersion of the waveguide (2).

9. Apparatus according to one of the preceding claims, **characterized in that** the radiation propagating in the waveguide (2) have a high mode overlap at the first, second, and third wavelength.

10. Apparatus according to one of the preceding claims, **characterized in that** the pump light source (1) is a pulsed ns or ps light source.

11. Apparatus according to one of the preceding claims, **characterized in that** the optical waveguide (2) consists of quartz glass.

12. Method for generation of electromagnetic radiation, wherein an excitation radiation (5) at a first wavelength is generated by means of a pump light source (1) and frequency-converted radiation (6, 7) at a second and a third wavelength is generated from the excitation radiation (5) by means of a waveguide (2), by degenerate four-wave frequency mixing, wherein the radiation (6, 7) propagating in the waveguide (2) is attenuated by a filter element (3) at the second or third wavelength, whereby a non-equilibrium in the photon count of the radiation components of the frequency-converted radiation (6, 7) is generated,
**characterized in that** the filter element (3) has an attenuation > 10 dB/m at the second or third wavelength, so that a re-transfer process is excluded.

## Revendications

1. Dispositif pour engendrer du rayonnement électromagnétique, comprenant une source de lumière de pompage (1) qui émet un rayonnement d'excitation (5) à une première longueur d'onde, ayant un guide d'onde optique (2) engendrant à partir du rayonnement d'excitation (5), par mélange à quatre ondes dégénéré de la source de lumière de pompage (1), un rayonnement converti en fréquence (6, 7) à une deuxième et une troisième longueurs d'onde, et avec un élément filtrant (3) qui atténue le rayonnement (6, 7) à la deuxième ou à la troisième longueur d'onde et engendre ainsi un déséquilibre du nombre de photons des parties de rayonnements du rayonnement converti en fréquence (6, 7), **caractérisé en ce que** l'élément filtrant (3) présente une atténuation >10 dB/m si bien qu'un procédé de transfert de retour soit exclu.

2. Dispositif selon la revendication 1, **caractérisé en ce que** le guide d'onde optique (2) est une fibre optique Large Mode Area.

3. Dispositif selon la revendication 1 ou 2, **caractérisé en ce que** le guide d'onde optique (2) est une fibre microstructurée Endlessly Single Mode.

4. Dispositif selon l'une des revendications précédentes, **caractérisé en ce que** la deuxième et/ou la troisième longueur d'onde est située dans le domaine visible ou infrarouge moyen du spectre optique.

5. Dispositif selon l'une quelconque des revendications précédentes, **caractérisé en ce que** l'élément filtrant (3) est intégré dans le guide d'onde optique (2).

6. Dispositif selon l'une quelconque des revendications précédentes, **caractérisé en ce que** l'élément filtrant (3) est une grille à période longue.

7. Dispositif selon l'une quelconque des revendications précédentes, **caractérisé en ce que** l'élément filtrant (3) est formé par les caractéristiques du matériau du guide d'onde optique (2).

8. Dispositif selon l'une quelconque des revendications précédentes, **caractérisé en ce que** la première longueur d'onde est située dans la gamme de la dispersion normale du guide d'onde (2).

9. Dispositif selon l'une quelconque des revendications précédentes, **caractérisé en ce que** le rayonnement propagé dans le guide d'onde (2) présente un chevauchement important de modes à la première, la deuxième et la troisième longueurs d'onde.

10. Dispositif selon l'une quelconque des revendications précédentes, **caractérisé en ce que** la source de lumière de pompage (1) est une source de lumière ns ou ps pulsée.

11. Dispositif selon l'une quelconque des revendications précédentes, **caractérisé en ce que** le guide d'onde optique (2) est en verre de quartz.

12. Procédé de génération de rayonnement électromagnétique, selon lequel un rayonnement d'excitation (5) est engendré à une première longueur d'onde par une source de lumière de pompage (1) et un rayonnement converti en fréquence (6, 7) est engendré à l'aide d'un guide d'onde (2) par mélange à quatre ondes dégénéré à partir du rayonnement d'excitation (5) à une deuxième et une troisième longueurs d'onde.
